# EUROPÄISCHE PATENTSCHRIFT

(11) **EP 1 354 843 B1**
(45) Veröffentlichungstag und Bekanntmachung des Hinweises auf die Patenterteilung: **07.11.2012**
(21) Anmeldenummer: 03003127.2
(22) Anmeldetag: 13.02.2003
(51) Int. Cl.: B66F 7/02, B66F 7/28

(54) **Säulenhebebühne**
Lifting column
Colonne de levage

(30) Priorität: 17.04.2002 DE 10217064
(43) Veröffentlichungstag der Anmeldung: 22.10.2003
(73) Patentinhaber: MAHA Maschinenbau Haldenwang GmbH & Co. KG, 87490 Haldenwang (DE)
(72) Erfinder: Knestel, Anton, 87496 Hopferbach (DE)
(74) Vertreter: MERH-IP Matias Erny Reichl Hoffmann

(56) Entgegenhaltungen:
- EP-A- 1 129 980
- DE-A- 2 311 845
- DE-U- 9 115 317
- DE-U- 20 001 476
- DE-U- 20 002 514
- DE-U- 29 720 755
- GB-A- 1 478 512

## Beschreibung

Die Erfindung betrifft eine Säulenhebebühne mit mindestens einer Tragsäule und ein Verfahren zum Steuern bzw. Regeln der Säulenhebebühne.

Bei Säulenhebebühnen der Bauart mit einer angetriebenen Gebindespindel und einer sich daran auf und ab bewegenden Tragmutter, die mit einer Last-Hebeeinrichtung verbunden ist, muss die Tragmutter auf Versagen überwacht werden. Bei herkömmlichen Säulenhebebühnen mit einer oder mehreren Tragsäulen sind dabei verschiedene Möglichkeiten bekannt.

Eine Möglichkeit stellt die Übertragung der Position der Last-Hebeeinrichtung mittels eines Zahnriemens an ein Potentiometer dar, Der Widerstandswert des Potentiometers entspricht einer Lage der Last-Hebeeinrichtung. Diese Lösung eignet sich beispielsureise zur Gleichlaufregelung mehrerer Tragsäulen recht gut, hat aber den Nachteil, dass ein Bruch der Tragmutter nur durch eine ruckartige Lageänderung, d.h. eine sprungartige Veränderung des Widerstandswerts des Potentiometers erfasst werden kann. Dies ist aber, wenn überhaupt, nur bei eingeschalteter Hebebühne möglich. Auch ist dabei zwingend erforderlich, das Potentiometer so zu justieren, dass die Null-Lage des Potentiometers mit der Null-Lage der Last-Hebeeinrichtung übereinstimmt.

Die DE 23 11845 A beschreibt eine Fördervorrichtung mit zwei Hubsäulen, auf denen jeweils ein Laufwagen verschiebbar ist, der von einem Elektromotor über eine drehfeste Gewindespindel antreibbar ist. Die Drehzahl der Elektromotoren wird auf elektrischem Wege synchronisiert.

Die DE 200 01476 U1 offenbart eine Säulenhebebühne gemäß dem Obergriff des Anspruchs 1.

Bekannt ist auch, zur Überwachung des Tragmutternbruchs zusätzliche Erfassungseinrichtungen zum Abtasten der Tragmutter und der Sicherungsmutter vorzusehen. Neben dem höheren technischen und auch steuerungstechnischen Aufwand ist hierbei das schwierige Justieren und Montieren der zusätzlichen Erfassungseinrichtung von Nachteil, da sich deren Lage zumeist an einer schwer zugänglicher Stelle befindet.

Bei einer anderen bekannten Lösungsmöglichkeit wird zur laufenden Überwachung des Abstands zwischen Tragmutter und Sicherungsmutter eine eigene Erfassungseinrichtungen zwischen Tragmutter und Sicherungsmutter angebracht.

Wegen der Bewegung der Tragmutter und der Sicherungsmutter und damit der Bewegung der Erfassungseinrichtung ist für die Verbindung der Erfassungseinrichtungen mit der Stromversorgung bzw. der Steuerung die Verwendung von flexiblen Spiralkabeln oder Kabelschleppen erforderlich.

Aufgabe der Erfindung ist es, eine Säulenhebebühne und ein Verfahren zum Steuern derselben zu schaffen, die die Tragmutternüberwachung auf einfache, kostengünstige und effiziente Weise realisieren.

Diese Aufgabe wird durch die Merkmale der unabhängigen Patentansprüche gelöst. Die Unteransprüche sind auf bevorzugte Ausführungsbeispiele und Weiterbildungen der Erfindung gerichtet.

Die erfindungsgemäße Säulenhebebühne weist eine Steuereinrichtung und mindestens eine Tragsäule auf. Jede Tragsäule kann eine drehbar gelagerte Hubspindel mit einem Aussengewinde und einen von der Steuereinrichtung gesteuerten Drehantrieb für die Hubspindel enthalten. In Eingriff mit der Hubspindel befindet sich eine Tragmutter, die durch eine Drehbewegung der Hubspindel an ihr verfahrbar ist. In Schwerkraftrichtung versetzt zu der Tragmutter ist eine ebenfalls mit der Hubspindel in Eingriff befindliche Fangmutter angeordnet, die mit der Tragmutter mitläuft. Mit der Tragmutter ist ein Hubschlitten verbunden, an dem mindestens ein Tragarm zum Tragen der Last angebracht ist. Die Tragsäule kann einen mit der Steuereinrichtung verbundenen Referenzwächter zur Erfassung einer Annäherung des Hubschlittens enthalten und einen mit der Steuereinrichtung verbundenen Drehwächter zur Erfassung einer Drehbewegung des Drehantriebs. Zur Positionsüberwachung des oder der Hubschlitten kann jeder Tragsäule eine mit der Steuereinrichtung verbundene Impulszähleinrichtung zugeordnet sein.

Vorteilhafterweise ist jede der Hubspindeln derart gelagert und geführt, dass Kräfte auf die Hubspindel in Richtung der Schwerkraft von der Lagerung aufgenommen werden und bei Kräften auf die Hubspindel entgegen der Schwerkraft jede der Hubspindeln entgegen der Schwerkraft bewegbar ist. Damit ist gewährleistet, dass wenn Lasten beim Absenken auf ein Hindernis treffen, sich die Hubspindel durch den von dem Hindernis aufgehaltenen Tragarm aus der Tragmutter herausschrauben kann.

Praktischerweise können der Referenzwächter und der Drehwächter als induktive Näherungsschalter ausgeführt sein, wobei der Drehwächter auch durch einen inkrementalen Drehgeber gebildet sein kann. Dieser Bauteile sind einfach in der Anwendung, zuverlässig und wartungsarm bzw. wartungsfrei.

Zweckmäßigerweise können zur Ermittlung der Drehrichtung der Drehantriebe bei einem Polwendeschalter zur Drehrichtungsumkehr der Drehantriebe entsprechende Hilfskontakte vorgesehen sein, was einem einfachen Aufbau der Steuerung entgegenkommt. Wahlweise bzw. außerdem kann auch zur Ermittlung der Drehrichtung der Drehantriebe der Drehwächter als Quadraturencoder ausgebildet sein, womit die Funktion der Drehrichtungsermittlung gleich im Drehantrieb integriert ist. Darüber hinaus kann sich auch die Ermittlung der Drehrichtung der Drehantriebe über die Ermittlung der Phasenlage der Drehantriebe sehr günstig auswirken, die hierbei auf einfache Weise durch einen Phasenvergleich erfolgt und bei der keine zusätzlichen mechanischen Bauteile benötigt werden.

Vorteilhafterweise wird ein Zählerstand einer der Impulszähleinrichtungen in Abhängigkeit der erfassten Drehrichtung des zugehörigen Drehantriebs inkrementiert oder dekrementiert, womit sichergestellt ist, dass die Position eines Hubschlittens zuverlässig nachvollziehbar ist.

Zweckmäßig wird eine Referenzposition des Hubschlittens durch den Referenzwächter in Verbindung mit der zugeordneten Impulszähleinrichtung überwacht, wobei in Referenzposition des Hubschlittens der zugeordneten Impulszähleinrichtung ein Referenzzählerstand zugewiesen wird. Praktischerweise kann als Referenzposition eine beliebige Lage des Hubschlittens herangezogen werden.

Vorteilhafterweise enthält die Steuereinrichtung bei Einsatz von mindestens zwei Tragsäulen eine Vergleichseinrichtung zum Vergleichen der Zählerstände der den Tragsäulen zugeordneten Impulszähleinrichtungen. Außerdem weist die Steuereinrichtung eine Abschalteinrichtung zum Abschalten der einzelnen Drehantriebe auf.

Ebenso vorteilhaft ermittelt die Vergleichseinrichtung anhand der Zählerstände der den Tragsäulen zugeordneten Impulszähleinrichtungen einen voreilenden Hubschlitten und zweckmäßig schaltet die Abschalteinrichtung den Drehantrieb der zugehörigen Hubspindel solange ab, bis die Zählerstandsdifferenz zwischen den Impulszähleinrichtungen einen vorbestimmten ersten Grenzwert unterschreitet. Damit kann der Gleichlauf der Tragsäulen wirksam hergestellt werden.

Sobald einer der Referenzwächter die Referenzlage des zugehörigen Hubschlittens meldet und die Vergleichseinrichtung feststellt, dass der Zählerstand der dem Hubschlitten zugeordneten Impulszähleinrichtung von dessen Referenzzählerstand abweicht, schaltet die Abschalteinrichtung mindestens den betreffenden Drehantrieb ab und gibt eine entsprechende Warnmeldung aus. Dadurch ist insbesondere eine Mutterbruchüberwachungseinrichtung gebildet, mit der ein Bruch der Tragmutter überwacht werden kann.

Sobald einer der Drehwächter bei eingeschaltetem Drehantrieb keine Drehbewegung erfasst, schaltet die Abschalteinrichtung zweckmäßig mindestens den betreffenden Drehantrieb ab und gibt eine entsprechende Warnmeldung aus. Auf diese Weise können das Auftreffen einer absinkenden Last auf ein Hindernis und/oder eine Störung des Drehantriebs wirksam überwacht werden.

Vorzugsweise schaltet die Abschalteinrichtung mindestens den betreffenden Drehantrieb ab und gibt eine entsprechende Warnmeldung aus, sobald die von einem der Drehwächter erfasste Drehzahl der zugehörigen Hubspindel niedriger als ein vorbestimmter zweiter Grenzwert ist, womit eine Überlastung der Säulenhebebühne festgestellt werden kann.

Sobald einer der Hubschlitten seine Referenzposition erreicht hat und der zugehörige Referenzwächter die Referenzposition nicht anzeigt, schaltet die Abschalteinrichtung vorteilhaft mindestens den betreffenden Drehantrieb ab und gibt eine entsprechende Warnmeldung aus. Auf diese Weise kann die Funktion des Referenzwächters bei jedem Anfahren der Referenzposition zuverlässig überprüft werden.

Ein Überschreiten einer vorbestimmten maximalen Höhenlage der Last kann dadurch vermieden werden, dass die Abschalteinrichtung mindestens den betreffenden Drehantrieb abschaltet und eine entsprechende Warnmeldung ausgibt, sobald eine der Impulszähleinrichtungen einen vorbestimmten Maximalwert erreicht hat.

Vorteilhafterweise wird eine Warnmeldung durch Aufleuchten einer oder mehrerer Signallampen angezeigt, was den Steuerungsumfang gering hält und die Übersichtlichkeit beim Bedienen der Säulenhebebühne sicherstellt.

Nützlicherweise wird nach einem Abschalten und/oder nach einem Ausfall der Stromversorgung eines oder mehrerer der Drehantriebe die Inkrementierung bzw. Dekrementierung der Zählerstände der betreffenden Impulszähleinrichtungen fortgesetzt. Dies geschieht, damit ein Nachlaufen der Hubspindeln erfasst werden kann. Die Zählerstände werden nach einer Auslaufzeit der Hubspindeln in einem nicht flüchtigen Speicher abgelegt, damit sie auch nach einem kompletten Stromausfall noch zur Verfügung stehen, und bei Wiederinbetriebnahme der Säulenhebebühne die Steuerung gegebenenfalls auf die Lage der Hubspindeln reagieren kann.

Zweckmäßig ist an jedem der Hubschlitten eine Verschleiß- bzw. Versagensanzeige für die Tragmutter vorgesehen, die einen Ist-Abstand zwischen der Tragmutter und der Fangmutter im Vergleich zu deren Soll-Abstand darstellt. Damit kann ohne jeglichen Steuerungsaufwand der Zustand der Tragmutter von außen kontrolliert werden.

Nachfolgend wird ein Verfahren zum Steuern einer erfindungsgemäßen Säulenhebebühne beschrieben:

Es ist vorgesehen, die Annäherung der Hubschlitten durch die jeweiligen Referenzwächter zu erfassen. Die Erfassung der Drehbewegung der Drehantriebe soll durch die jeweiligen Drehwächter erfolgen. Die Position der Hubschlitten kann durch die jeweiligen Impulszähleinrichtungen überwacht werden.

Vorzugsweise erfolgt das Ermitteln der Drehrichtung der Drehantriebe durch ein Auswerten der entsprechenden Hilfskontakte eines Polwendeschalters zur Drehrichtungsumkehr der Drehantriebe, ein Verwenden eines Quadraturencoders als Drehwächter, und/oder durch Ermitteln der Phasenlage der Drehantriebe. Diese Maßnahmen können wahlweise bzw. kombiniert angewendet werden, je nachdem, ob ein einfacher Aufbau der Steuerung, die Verminderung mechanischer Bauteile oder ein Kontrollieren der Funktionen durch redundante Systeme bei der Verwirklichung der erfindungsgemäßen Säulenhebebühne im Vordergrund steht.

Bevorzugt erfolgt ein Inkrementieren oder Dekrementieren eines Zählerstands einer der Impulszähleinrichtungen in Abhängigkeit der erfassten Drehrichtung des zugehörigen Drehantriebs, damit die Position eines Hubschlittens einfach und eindeutig bestimmt werden kann.

Praktischerweise erfolgt ein Überwachen einer Referenzposition der Hubschlitten durch den jeweiligen Referenzwächter in Verbindung mit der zugeordneten Impulszähleinrichtung. Dabei kann in Referenzposition des jeweiligen Hubschlittens der zugeordneten Impulszähleinrichtung ein Referenzzählerstand zugewiesen werden. Praktischerweise kann eine beliebige Lage des Hubschlittens als Referenzposition herangezogen werden.

Vorteilhafterweise ist ein Ermitteln eines voreilenden Hubschlittens vorgesehen, das durch Vergleichen der Zählerstände der den Tragsäulen zugeordneten Impulszähleinrichtungen erfolgt. Hierbei kann ein Abschalten des Drehantriebs der zugehörigen Hubspindel solange erfolgen, bis die Zählerstandsdifferenz zwischen den Impulszähleinrichtungen einen vorbestimmten ersten Grenzwert unterschreitet. Ein Gleichlauf der Tragsäulen kann damit wirksam sichergestellt werden.

Sobald zweckmäßig einer der Referenzwächter die Referenzlage des zugehörigen Hubschlittens meldet und die Vergleichseinrichtung feststellt, dass der Zählerstand der dem Hubschlitten zugeordneten Impulszähleinrichtung von dessen Referenzzählerstand abweicht, kann ein Abschalten mindestens des betreffenden Drehantriebs und die Ausgabe einer entsprechenden Warnmeldung erfolgen. Damit kann insbesondere ein Bruch der Tragmutter überwacht werden.

Ein Abschalten mindestens des betreffenden Drehantriebs und die Ausgabe einer entsprechenden Warnmeldung kann bevorzugt dann erfolgen, sobald einer der Drehwächter bei eingeschaltetem Drehantrieb keine Drehbewegung erfasst. Auf diese Weise können das Auftreffen einer absinkenden Last auf ein Hindernis und/oder eine Störung des Drehantriebs wirksam überwacht werden.

Vorteilhaft kann ein Abschalten mindestens des betreffenden Drehantriebs und die Ausgabe einer entsprechenden Warnmeldung erfolgen, sobald die von einem der Drehwächter erfasste Drehzahl der zugehörigen Hubspindel niedriger als ein vorbestimmter zweiter Grenzwert ist. Eine Überlastung der Säulenhebebühne kann so festgestellt werden.

Nach einem bevorzugten Ausführungsbeispiel kann, sobald einer der Hubschlitten seine Referenzposition erreicht hat und der zugehörige Referenzwächter die Referenzposition nicht anzeigt, ein Abschalten mindestens des betreffenden Drehantriebs und die Ausgabe einer entsprechenden Warnmeldung erfolgen. Eine Überprüfung der Funktion des Referenzwächters kann so bei jedem Anfahren der Referenzposition zuverlässig erfolgen.

Sobald eine der Impulszähleinrichtungen einen vorbestimmten Maximalwert erreicht hat, kann bevorzugt ein Abschalten mindestens des betreffenden Drehantriebs und die Ausgabe einer entsprechenden Warnmeldung erfolgen, damit ein Überschreiten einer vorbestimmten maximalen Höhenlage der Last vermieden werden kann.

Praktischerweise kann das Ausgeben einer entsprechenden Warnmeldung unter anderem durch ein Aufleuchten einer oder mehrerer Signallampen erfolgen, womit der Steuerungsumfang gering gehalten und die Übersichtlichkeit beim Bedienen der Säulenhebebühne sichergestellt werden kann.

Vorteilhafterweise erfolgt nach einem Abschalten und/oder nach einem Ausfall der Stromversorgung eines oder mehrerer der Drehantriebe eine Fortsetzung der Inkrementierung bzw. Dekrementierung der Zählerstände der betreffenden Impulszähleinrichtungen, um ein Nachlaufen der Hubspindeln zu erfassen. Nach einer Auslaufzeit der Hubspindeln kann ein Ablegen der Zählerstände in einem nicht flüchtigen Speicher vorgesehen sein. Somit können die Zählerstände bzw. die Lage der Hubspindeln auch nach einem vollständigen Stromausfall noch zur Verfügung stehen, und die Steuerung kann bei Wiederinbetriebnahme der Säulenhebebühne gegebenenfalls auf die Lage der Hubspindeln reagieren.

Nach einem bevorzugten Ausführungsbeispiel erfolgt ein Anzeigen eines Verschleißes bzw. eines Versagens der Tragmutter durch Darstellen eines Ist-Abstands zwischen der Tragmutter und der Fangmutter im Vergleich zu deren Soll-Abstand. Damit kann ohne jeglichen Steuerungsaufwand der Zustand der Tragmutter von außen kontrolliert werden.

Weitere Besonderheiten und Vorzüge der Erfindung ergeben sich aus der folgenden Beschreibung der bevorzugten Ausführungsbeispiele bzw. Weiterbildungen der Erfindung anhand der beiliegenden-schematischen Zeichnungen. Es zeigen:
- Fig. 1: eine teilweise geschnittene Vorderansicht eines Ausführungsbeispiels der erfindungsgemäßen Säulenhebebühne mit zwei Tragsäulen;
- Fig. 2: eine vergrößerte Schnittdarstellung der Anordnung einer Tragmutter und einer Fangmutter auf einer Hubspindel gemäß einem Ausführungsbeispiel; und
- Fig. 3: eine schematische Darstellung einer Steuerung einer erfindungsgemäßen Säulenhebebühne.

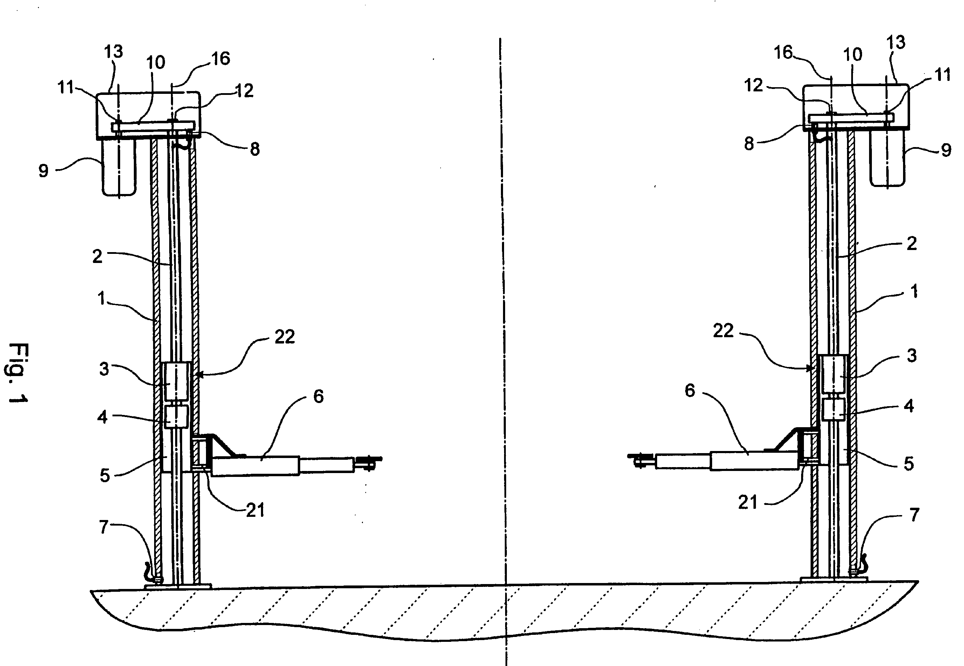

Fig. 1 zeigt eine Ausführung der erfindungsgemäßen Säulenhebebühne mit zwei Tragsäulen 1, die vertikal ausgerichtet sind und gegenüberliegend zueinander symmetrisch angeordnet sind. Innerhalb jeder Tragsäule 1 ist eine Hubspindel 2 mit Aussengewinde durch eine (nicht dargestellte) Lagerung bzw. eine (nicht dargestellte) Führung zentrisch drehbar gelagert und entlang ihrer Hochachse 16 geführt. In diesem Ausführungsbeispiel befindet sich die Lagerung im oberen Bereich der Hubspindel 2 und die Führung derselben an ihrem unteren Bereich. Prinzipiell kann jedoch auch die Lagerung der Hubspindel 2 an dem unteren Ende der Hubspindel 2 und die Führung an ihrem oberen Ende angeordnet sein, oder aber die Lagerung kann sich zwischen zwei Führungen befinden, die an dem oberen und unteren Ende der Hubspindel 2 vorgesehen sind. Die Lagerung der Hubspindel 2 ist derart ausgeführt, dass entlang der Hochachse 16 der Hubspindel 2 und in Richtung der Schwerkraft auf die Hubspindel 2 wirkende Kräfte von der Lagerung aufgenommen werden. Selbstverständlich werden auch die radial auf die Hubspindel 2 wirkenden Antriebskräfte von der Lagerung aufgenommen. Hingegen bewirken entlang der Hochachse 16 der Hubspindel 2 und entgegen der Richtung der Schwerkraft auf die Hubspindel 2 wirkende Kräfte, dass die Hubspindel 2 in ihrer Führung vertikal nach oben angehoben wird. Dies kann erreicht werden durch Vorsehen einer Schulter, mit der die Hubspindel 2 auf einem kombinierten Axial-/Radiallager aufliegt. Selbstverständlich können auch andere Lagerarten und Gestaltungen der Hubspindel 2 vorgesehen werden, die den beschriebenen Zweck erfüllen. Vorteilhafterweise kann ein mechanischer Anschlag vorgesehen sein, der verhindert, dass die Hubspindel 2 aus ihrer Führung gehoben wird. Die Führung der Hubspindel 2 lässt nur eine Bewegung der Hubspindel 2 entlang ihrer Hochachse 16 zu, nicht jedoch eine Bewegung in Richtung des Radius der Hubspindel 2.

Die Hubspindel 2 ist durch einen Drehantrieb 9 über ein Riemengetriebe 10, 11, 12 10, 11, 12 antreibbar. Ein Antriebsriemen verbindet eine erste Riemenscheibe 11 an dem Drehantrieb 9 mit einer zweiten Riemenscheibe 12 am oberen Ende der Hubspindel 2. Der Drehantrieb 9 mit dem Riemengetriebe 10, 11, 12 10, 11, 12 ist durch ein Gehäuse 13 abgedeckt. Von unten tastet ein Drehwächter 8 die als Speichenrad ausgebildete zweite Riemenscheibe 12 ab. Der Drehwächter 8 kann als inkrementaler Drehgeber oder Winkelkodierer ausgeführt sein und gibt bei einer Drehung der Hubspindel 2 um einen vorbestimmten Winkel ein bevorzugt digitales Signal ab. Der Drehwächter 8 ist mit einer Steuerung verbunden, die dessen Signale auswertet und so eine Drehbewegung der zweiten Riemenscheibe 12 bzw. der damit verbundenen Hubspindel 2 erfasst. Auf die zweite Riemenscheibe 12 kann praktischerweise eine mechanische Reibungsbremse wirken, die vorteilhafterweise von der Steuerung ausgelöst werden kann. Mit der Hubspindel 2 sind eine Tragmutter 3 und eine davon vertikal nach unten beabstandete Fangmutter 4 in Eingriff. An der Tragmutter 3 ist ein Hubschlitten 5 angebracht, der einen Flansch 21 aufweist, an dem zwei Tragarme 6 zum Aufnehmen der Last vorgesehen sind. Die Tragarme 6 können senkrecht zu der Hochachse 16 der Hubspindel 2 verschwenkbar sein. Vorteilhafterweise sind die Tragarme 6 in ihrer Länge teleskopierbar ausgeführt. Der Hubschlitten 5 tritt mit seinem Flansch 21 aus einer Aussparung 22 der Tragsäule 1 hervor. Dadurch wird ein Mitdrehen des Hubschlittens 5 bzw. der Tragmutter 3 mit der in Drehung versetzten Hubspindel 2 verhindert und der Hubschlitten 5 vertikal an der Tragsäule 1 geführt. Auf diese Weise wird der Hubschlitten 5 und die an ihm befestigten Tragarme 6 durch eine Drehung der Hubspindel 2 vertikal verfahren. Selbstverständlich können auch die Tragarme 6 durch die Aussparung 22 in die Tragsäule 1 hineinragen, und dort an dem Hubschlitten 5 befestigt sein. Die Fangmutter 4 ist ähnlich wie die Tragmutter 3 am Mitdrehen mit der Hubspindel 2 gehindert und läuft deswegen mit der Tragmutter 3 mit. Selbstverständlich kann auch eine Fangmutter 4 mit Kunststoff- oder Metalleinsatz 23, wie bei einer selbstsichernden Mutter, verwendet werden, um das Mitdrehen der Fangmutter 4 mit der angetriebenen Hubspindel 2 zu verhindern.

Am unteren Ende der Tragsäule 1 ist ein Referenzwächter 7 vorgesehen, der eine Annäherung des Hubschlittens 5 an den Referenzwächter 7 überwacht. Der Referenzwächter 7 ist mit der Steuerung verbunden und sendet bei Annäherung des Hubschlittens 5 ein Signal an die Steuerung. Zweckmäßigerweise ist der Referenzwächter 7 an einer Stelle angebracht, die als die Referenzposition des Hubschlittens 5 bestimmt wird, der Referenzwächter 7 kann aber auch an einer anderen vorbestimmten Stelle der Tragsäule 1 angebracht werden, an der die Annäherung des Hubschlittens 5 durch den Referenzwächter 7 erfasst werden kann. In Verbindung mit einer in der Steuerung enthaltenen Impulszähleinrichtung wird die Referenzposition des Hubschlittens 5 überwacht.

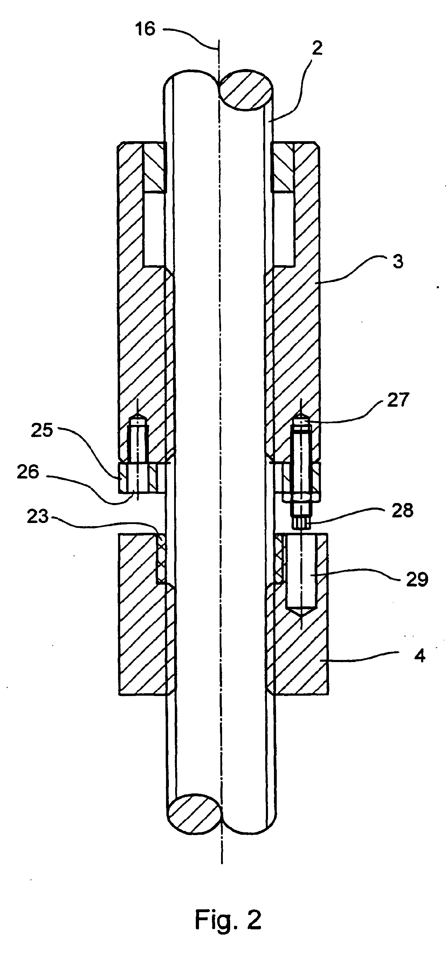

In Fig. 2 ist ein Teil der Hubspindel 2 dargestellt, auf dem sich die Tragmutter 3 und die Fangmutter 4 befinden. An der Unterseite der Tragmutter 3 ist die Verschleiß- bzw. Versagensanzeige 24 angebracht. Die Verschleiß- bzw. Versagensanzeige 24 besteht aus einem Ring 25 mit mehreren an einem Teilkreis angeordneten Durchgangsbohrungen 26. Mit gleichem Bohrbild sind unten in der Tragmutter 3 Gewindesacklöcher 27 eingebracht, in die durch die Durchgangsbohrungen 26 des Rings 25 Befestigungsschrauben eingeschraubt werden können. In einer Bohrung sitzt eine mit einer Mutter gekonterte Madenschraube oder eine Vierkantschraube 28 oder ähnliches, die über den Ring 25 in Richtung Fangmutter 4 übersteht. Der Überstand der Maden- oder Vierkantschraube 28 entspricht dem Sollmaß des Abstandes der Tragmutter 3 von der Fangmutter 4. Gegenüber von der Maden- oder Vierkantschraube 28 ist in der Fangmutter 4 eine Sackbohrung 29 angeordnet, in die die Maden- oder Vierkantschraube 28 eintauchen kann, wenn der Abstand der Tragmutter 3 von der Fangmutter 4 wegen Gewindeverschleiß in der Tragmutter 3 bzw. Tragmutternbruch verringert wird. Praktischerweise ist die Maden- oder Vierkantschraube 28 an einer von außen leicht einzusehenden Stelle angebracht, beispielsweise ist sie durch die Aussparung 22 der Tragsäule 1 hindurch zu sehen. So kann z. B. ein Bediener anhand des Vergleichs des Soll-Abstands mit dem Ist-Abstand der Tragmutter 3 von der Fangmutter 4 den Zustand der Tragmutter 3 unabhängig von der Steuerung überwachen. Bei einem Unterschreiten des Soll-Abstands kann dann auf einen unzulässigen Verschleiß geschlossen werden. Die Überwachung dieses Abstands kann visuell erfolgen. Selbstverständlich wäre es auch denkbar, diesen Abstand über eine entsprechende Sensorik zu erfassen und bei Unterschreitung des Soll-Abstands durch die Steuereinrichtung 30 gesteuert eine Warnmeldung auszugeben und/oder einen weiteren Betrieb der Säulenhebebühne zu verhindern bzw. einen oder alle Drehantriebe 9 abzuschalten.

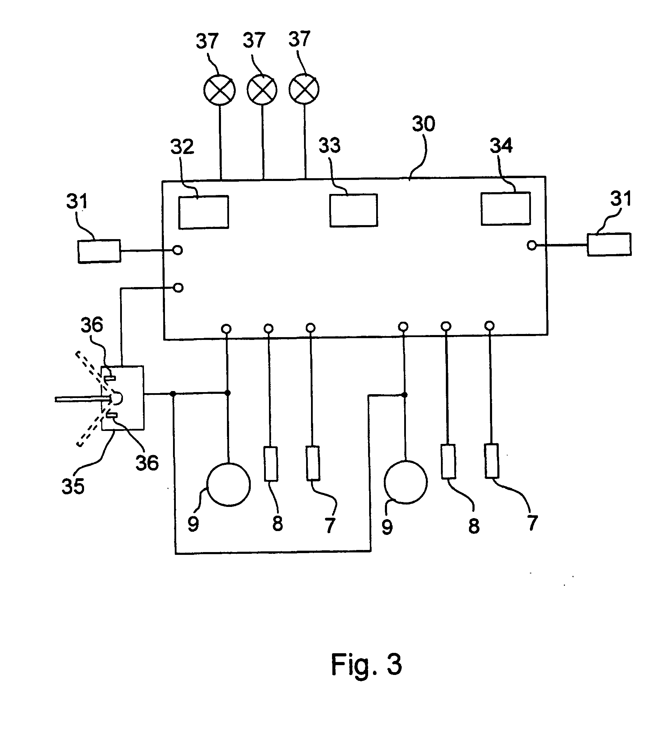

In Fig. 3 ist schematisch die Steuereinrichtung 30 für ein Ausführungsbeispiel der erfindungsgemäßen Säulenhebebühne mit zwei Tragsäulen 1 dargestellt. Von der Steuereinrichtung 30 werden die Drehantriebe 9 der beiden Hubspindeln 2 gesteuert. Die Drehrichtung der Drehantriebe 9 wird durch die Schalterstellung des Polwendeschalters 35 bestimmt und von den entsprechenden Hilfskontakten 36 erfasst und an die Steuereinrichtung 30 gemeldet. Den Drehantrieben sind jeweils Referenzwächter 7 und Drehwächter 8 zugeordnet, die ihrerseits mit der Steuereinrichtung 30 verbunden sind. Weiter ist je Drehantrieb 9 zum Zählen der Signale der Drehwächter 8 eine Impulszähleinrichtung 31 mit der Steuereinrichtung 30 verbunden. Die Steuereinrichtung 30 enthält eine Vergleichseinrichtung 32 zum Vergleichen der Zählerstände, die den je Drehantrieb 9 erfassten Impulsen entsprechen, und eine Abschalteinrichtung 33 für die einzelnen Drehantriebe 9. Zum Ablegen der Zählerstände ist in der Steuereinrichtung 30 ein nicht flüchtiger Speicher 34 vorgesehen.

Soll eine Last, beispielsweise ein Kraftfahrzeug, von der beschriebenen Säulenhebebühne evtl. zu Reparaturzwecken angehoben werden, ist zunächst das Kraftfahrzeug etwa mittig zwischen den beiden Tragsäulen 1 zu positionieren. Die praktischerweise schwenkbaren und teleskopierbaren Tragarme 6 können dann an zum Anheben geeignete Stellen des Kraftfahrzeugs positioniert werden. Ein Bediener nimmt die Säulenhebebühne in Betrieb und schaltet mittels des Polwendeschalters 35 die zum Anheben der Last geeignete Drehrichtung der Drehantriebe 9. Über das jeweilige Riemengetriebe 10, 11, 12 werden dann die Hubspindeln 2 in Drehung versetzt. Wie schon beschrieben, können sich die jeweiligen Tragmuttern 3 nicht mit der Hubspindel 2 mitdrehen und laufen deswegen an der Hubspindel 2 nach oben, gefolgt von ihren zugeordneten Fangmuttern 4. Die an den Tragmuttern 3 befestigten Tragarme 6 bewegen sich mit den Tragmuttern 3 nach oben und heben das Kraftfahrzeug an. Zur Synchronisierung der Drehantriebe 9 dient die Steureinrichtung in Verbindung mit der Vergleichseinrichtung 32, die die Zählerstände der Impulszähleinrichtungen 31 der Drehantriebe 9 miteinander vergleicht. Ein voreilender Drehantrieb 9 wird solange von der Abschalteinrichtung 33 abgeschaltet, bis die Abweichung seines Zählerstands von dem Zählerstand des anderen Drehantriebs 9 wieder unterhalb eines vorbestimmten ersten Grenzwerts liegt.

Wenn ein für die Säulenhebebühne zu schweres Kraftfahrzeug angehoben wird, sinkt durch die Überlast bedingt die Drehzahl mindestens eines der Drehantriebe 9 ab. Sobald die von den Drehwächtern erfasste Drehzahl unter einem zweiten vorbestimmten Grenzwert liegt, wird mindestens der betreffende Drehantrieb 9 von der Steuereinrichtung 30 über die Abschalteinrichtung 33 abgeschaltet . Hierbei wird sinnvollerweise auch eine Warnmeldung, beispielsweise in Form einer aufleuchtenden Warnleuchte 37, ausgegeben. In der Regel werden in dem beschriebenen Falle zur Sicherheit alle Drehantriebe 9 abgeschaltet.

Sollte zu Beginn oder gar während des Hub- oder Absenkvorgangs ein Antriebsriemen 10 von einer Riemenscheibe 11, 12 rutschen oder reißen, wird durch die Steuereinrichtung 30 über die Abschalteinrichtung 33 mindestens der betreffende Drehantrieb 9 abgeschaltet , sobald der betreffende Drehwächter 8 bei eingeschaltetem Drehantrieb 9 keine Drehbewegung erfasst. Sinnvollerweise kann auch hierbei eine Warnmeldung ausgegeben werden. Zur Sicherheit werden auch in diesem Fall regelmäßig alle Drehantriebe 9 abgeschaltet werden.

Für den Fall, dass sich eine Tragmutter 3 relativ zu ihrer Hubspindel 2 nach unten bewegen sollte, beispielsweise wenn das Gewinde an der Tragmutter 3 oder der Hubspindel 2 verschlissen ist oder gar ausbricht, oder wenn die Tragmutter 3 selbst bricht, wird dies spätestens beim Anfahren der Referenzposition des betreffenden Hubschlittens 5 von der Steuereinrichtung 30 erfasst, weil beim Erreichen der Referenzposition von der Steuereinrichtung 30 geprüft wird, ob das von dem Referenzwächter gemeldete Erreichen der Referenzposition mit dem jeweiligen Zählerstand, d.h. dem Referenzzählerstand, der Impulszähleinrichtung 31 übereinstimmt. Da bei dem hier beschriebenen Schaden an der Tragmutter 3 bzw. an der Hubspindel 2 der Zählerstand bei dem vom Referenzwächter gemeldeten Erreichen der Referenzposition vom Referenzzählerstand der betreffenden Hubspindel 2 abweicht, wird dies von der Vergleichseinrichtung 32 erkannt und die Steuereinrichtung 30 schaltet mindestens den betreffenden Drehantrieb 9 über die Abschalteinrichtung 33 ab. Die Steuereinrichtung 30 kann diesen Zustand auch durch ein Aufleuchten einer Warnleuchte 37 anzeigen. Es ist durchaus sinnvoll, in dem eben beschriebenen Fall sicherheitshalber alle Drehantriebe 9 abzuschalten.

Spätestens wenn eine der Impulszähleinrichtungen 31 einen vorbestimmten Maximalwert erreicht hat, wird der Hubvorgang durch Abschalten mindestens des betreffenden Drehantriebs 9 angehalten. Durch das Aufleuchten eine Warnleuchte 37 kann dieser Zustand dem Bediener angezeigt werden. Auch hier kann es sinnvoll sein, alle Drehantriebe 9 abzuschalten, sobald eine der Impulszähleinrichtungen 31 den Maximalwert erreicht hat.

Sollte beim Absenken des Kraftfahrzeugs ein Tragarm 6 auf ein Hindernis auflaufen, wird sich die Hubspindel 2 mindestens des betreffenden Tragarms 6 aus der an der Abwärtsbewegung gehinderten Tragmutter 3 nach oben aus der Tragmutter 3 heraus schrauben. Dies wird durch die erfindungsgemäße Lagerung gestattet, wobei die Hubspindel 2 bei dieser Bewegung noch immer entlang ihrer Hochachse geführt bleibt. Durch die Aufwärtsbewegung der Hubspindel 2 entfernt sich auch die zweite Riemenscheibe 12 immer mehr von dem zugeordneten Referenzwächter 7, der von unten die zweite Riemenscheibe 12 abtastet. Spätestens, wenn der Abstand der zweiten Riemenscheibe 12 von dem Referenzwächter 7 größer wird als der maximale Schaltabstand, erfasst der Referenzwächter 7 trotz eingeschaltetem Drehantrieb 9 keine Drehbewegung mehr, was zum Abschalten mindestens des betreffenden Drehantriebs 9 führt, ähnlich wie in dem Fall, wenn der Antriebsriemen 10 von einer Riemenscheibe 11, 12 rutscht oder reißt. Wie auch dort schon ausgeführt, werden sinnvollerweise alle Drehantriebe 9 abgeschaltet. Auch kann dieser Zustand dem Bediener durch eine aufleuchtende Warnleuchte 37 angezeigt werden. Sicherheitshalber kann ein mechanischer Anschlag an der Hubsäule vorgesehen werden, der verhindert, dass sich die Hubsäule aus ihrer Führung bewegt. Dieses eben beschriebene Prinzip funktioniert selbstverständlich auch, wenn eine Säulenhebebühne mit nur einer Tragsäule 1 verwendet wird.

Weiter kann bei einem Auffahren auf ein Hindernis beim Absenken einer Last nach dem Abschalten eines und/oder aller Drehantriebe 9 vorgesehen werden, den oder die Drehantriebe 9 in der umgekehrten Richtung wieder anzuschalten, bis die Tragarme 6 um einen vorbestimmten Betrag von dem Hindernis angehoben worden sind, um so das Hindernis freizugeben.

Nach einem Abschalten und/oder nach einem Ausfall der Stromversorgung an einem oder mehreren der Drehantriebe 9 wird das Inkrementieren bzw. Dekrementieren der Zählerstände der betreffenden Impulszähleinrichtungen 31 fortgesetzt, um ein Nachlaufen der Hubspindeln 2 zu erfassen. Die Zählerstände, die in einem Arbeitsspeicher gespeichert sein können, werden hierbei nach einer Auslaufzeit der Hubspindeln 2 in einem nicht flüchtigen Speicher 34 abgelegt. Somit stehen die Zählerstände selbst nach einem kompletten Stromausfall noch zur Verfügung, und bei Wiederinbetriebnahme der Säulenhebebühne kann die Steuerung gegebenenfalls auf die Lage der Hubspindeln 2 reagieren.

Besondere Vorteile der beschriebenen Erfindung sind, dass umfangreiche Überwachungs- und Sicherheitsfunktionen mit einem geringen Aufwand an Sensoren realisiert worden sind, durch die erfindungsgemäße Verwendung und Anbringung der Sensoren auf bewegliche Kabelzuführungen, die immer eine potentielle Fehlerquelle darstellen, verzichtet werden kann, und dass die gesamte Ausführung der erfindungsgemäßen Säulenhebebühne robust, einfach und wartungsfreundlich und damit kostengünstig ist.

## Patentansprüche

1. Säulenhebebühne mit einer Steuereinrichtung (30) und mindestens einer Tragsäule (1), wobei die Tragsäule (1) enthält:
- eine drehbar gelagerte Hubspindel (2) mit einem Außengewinde,
- einen von der Steuereinrichtung (30) gesteuerten Drehantrieb (9) für die Hubspindel (2),
- eine mit der Hubspindel (2) in Eingriff befindliche Tragmutter (3), die durch eine Drehbewegung der Hubspindel (2) daran verfahrbar ist,
- eine mit der Hubspindel (2) in Eingriff befindliche Fangmutter (4), die zu der Tragmutter (3) in Schwerkraftrichtung versetzt angeordnet ist und mit der Tragmutter (3) mitläuft,
- einen mit der Tragmutter (3) verbundenen Hubschlitten (5), an dem mindestens ein Tragarm (6) angebracht ist, **gekennzeichnet durch**
- einen mit der Steuereinrichtung (30) verbundenen Referenzwächter (7) zur Erfassung einer Annäherung des Hubschlittens (5), und
- einen mit der Steuereinrichtung (30) verbundenen Drehwächter (8) zur Erfassung einer Drehbewegung des Drehantriebs (9),
wobei jeder Tragsäule (1) eine mit der Steuereinrichtung (30) verbundene Impulszähleinrichtung (31) zur Positionsüberwachung der Hubschlitten (5) zugeordnet ist.

2. Säulenhebebühne nach Anspruch 1, **dadurch gekennzeichnet, dass** jede der Hubspindeln (2) derart gelagert und geführt ist, dass Kräfte auf die Hubspindeln (2) in Richtung der Schwerkraft von der Lagerung aufgenommen werden und bei Kräften auf die Hubspindeln (2) entgegen der Schwerkraft jede der Hubspindeln (2) entgegen der Schwerkraft bewegbar ist.

3. Säulenhebebühne nach Anspruch 1 oder 2, **dadurch gekennzeichnet, dass** der Referenzwächter (7) und der Drehwächter (8) induktive Näherungsschalter sind, wobei der Drehwächter (8) auch durch einen inkrementalen Drehgeber gebildet sein kann.

4. Säulenhebebühne nach mindestens einem der Ansprüche 1 bis 3, **dadurch gekennzeichnet, dass** zur Ermittlung der Drehrichtung der Drehantriebe (9)
- bei einem Polwendeschalter (35) zur Drehrichtungsumkehr der Drehantriebe (9) entsprechende Hilfskontakte (36) vorgesehen sind,
- der Drehwächter (8) als Quadraturencoder ausgebildet ist, und / oder
- die Phasenlage der Drehantriebe (9) ermittelt wird.

5. Säulenhebebühne nach mindestens einem der Ansprüche 1 bis 4, **dadurch gekennzeichnet, dass** ein Zählerstand einer der Impulszähleinrichtungen (31) in Abhängigkeit der erfassten Drehrichtung des zugehörigen Drehantriebs (9) inkrementiert oder dekrementiert wird.

6. Säulenhebebühne nach mindestens einem der Ansprüche 1 bis 5, **dadurch gekennzeichnet, dass** eine Referenzposition der Hubschlitten (5) durch den jeweiligen Referenzwächter (7) in Verbindung mit der zugeordneten Impulszähleinrichtung (31) überwacht wird, wobei in Referenzposition des jeweiligen Hubschlittens (5) der zugeordneten Impulszähleinrichtung (31) ein Referenzzählerstand zugewiesen wird.

7. Säulenhebebühne nach mindestens einem der Ansprüche 1 bis 6, **dadurch gekennzeichnet, dass** bei Einsatz von mindestens zwei Tragsäulen (1) die Steuereinrichtung (30) eine Vergleichseinrichtung (32) zum Vergleichen der Zählerstände der den Tragsäulen (1) zugeordneten Impulszähleinrichtungen (31) enthält und eine Abschalteinrichtung (33) zum Abschalten der einzelnen Drehantriebe (9) aufweist.

8. Säulenhebebühne nach mindestens einem der Ansprüche 1 bis 7, **dadurch gekennzeichnet, dass** die Vergleichseinrichtung (32) anhand der Zählerstände der den Tragsäulen (1) zugeordneten Impulszähleinrichtungen (31) einen voreilenden Hubschlitten (5) ermittelt und die Abschalteinrichtung (33) den Drehantrieb (9) der zugehörigen Hubspindel (2) solange abschaltet, bis die Zählerstandsdifferenz zwischen den Impulszähleinrichtungen (31) einen vorbestimmten ersten Grenzwert unterschreitet.

9. Säulenhebebühne nach mindestens einem der Ansprüche 1 bis 8, **dadurch gekennzeichnet, dass**, sobald einer der Referenzwächter (7) die Referenzposition des zugehörigen Hubschlittens (5) meldet und die Vergleichseinrichtung (32) feststellt, dass der Zählerstand der dem Hubschlitten (5) zugeordneten Impulszähleinrichtung (31) von dessen Referenzzählerstand abweicht, die Abschalteinrichtung (33) mindestens den betreffenden Drehantrieb (9) abschaltet und eine entsprechende Warnmeldung ausgibt, wodurch insbesondere eine Mutterbruchüberwachungseinrichtung zum Überwachen eines Bruches der Tragmutter (3) gebildet ist.

10. Säulenhebebühne nach mindestens einem der Ansprüche 1 bis 9, **dadurch gekennzeichnet, dass** die Abschalteinrichtung (33) mindestens den betreffenden Drehantrieb (9) abschaltet und eine entsprechende Warnmeldung ausgibt, sobald einer der Drehwächter (8) bei eingeschaltetem Drehantrieb (9) keine Drehbewegung erfasst.

11. Säulenhebebühne nach mindestens einem der Ansprüche 1 bis 10, **dadurch gekennzeichnet, dass** die Abschalteinrichtung (33) mindestens den betreffenden Drehantrieb (9) abschaltet und eine entsprechende Warnmeldung ausgibt, sobald die von einem der Drehwächter (8) erfasste Drehzahl der zugehörigen Hubspindel (2) niedriger als ein vorbestimmter zweiter Grenzwert ist.

12. Säulenhebebühne nach mindestens einem der Ansprüche 1 bis 11, **dadurch gekennzeichnet, dass** die Abschalteinrichtung (33) mindestens den betreffenden Drehantrieb (9) abschaltet und eine entsprechende Warnmeldung ausgibt, sobald einer der Hubschlitten (5) seine Referenzposition erreicht hat und der zugehörige Referenzwächter (7) die Referenzposition nicht anzeigt.

13. Säulenhebebühne nach mindestens einem der Ansprüche 1 bis 12, **dadurch gekennzeichnet, dass** die Abschalteinrichtung (33) mindestens den betreffenden Drehantrieb (9) abschaltet und eine entsprechende Warnmeldung ausgibt, sobald eine der Impulszähleinrichtungen (31) einen vorbestimmten Maximalwert erreicht hat.

14. Säulenhebebühne nach mindestens einem der Ansprüche 1 bis 13, **dadurch gekennzeichnet, dass** die Warnmeldung durch Aufleuchten einer oder mehrerer Signallampen (37) angezeigt wird.

15. Säulenhebebühne nach mindestens einem der Ansprüche 1 bis 14, **dadurch gekennzeichnet, dass** nach einem Abschalten und/oder nach einem Ausfall der Stromversorgung eines oder mehrerer der Drehantriebe (9) die Inkrementierung bzw. Dekrementierung der Zählerstände der betreffenden Impulszähleinrichtungen (31) fortgesetzt wird, um ein Nachlaufen der Hubspindeln (2) zu erfassen, wobei die Zählerstände nach einer Auslaufzeit der Hubspindeln (2) in einem nicht flüchtigen Speicher (34) abgelegt werden.

16. Säulenhebebühne nach mindestens einem der Ansprüche 1 bis 15, **dadurch gekennzeichnet, dass** an jedem der Hubschlitten (5) eine Verschleiß- bzw. Versagensanzeige (25, 26) für die Tragmutter (3) vorgesehen ist, die einen Ist-Abstand zwischen der Tragmutter (3) und der Fangmutter (4) im Vergleich zu deren Soll-Abstand darstellt.

17. Verfahren zum Steuern einer Säulenhebebühne nach mindestens einem der Ansprüche 1 bis 16, wobei folgende Schritte vorgesehen sind:
- Erfassen der Annäherung des Hubschlittens (5) durch den jeweiligen Referenzwächter (7),
- Erfassen der Drehbewegung des Drehantriebs (9) durch den jeweiligen Drehwächter (8), und
- Überwachen der Position des Hubschlittens (5) durch die jeweilige Impulszähleinrichtung (31).

18. Verfahren zum Steuern einer Säulenhebebühne nach Anspruch 17, **dadurch gekennzeichnet, dass** das Ermitteln der Drehrichtung der Drehantriebe (9) erfolgt durch:
- Auswerten der entsprechenden Hilfskontakte (36) eines Polwendeschalters (35) zur Drehrichtungsumkehr der Drehantriebe (9),
- Verwenden eines Quadraturencoders als Drehwächter (8), und/oder
- Ermitteln der Phasenlage der Drehantriebe (9).

19. Verfahren zum Steuern einer Säulenhebebühne nach Anspruch 17 oder 18, **dadurch gekennzeichnet, dass** ein Inkrementieren oder Dekrementieren eines Zählerstands einer der Impulszähleinrichtungen (31) in Abhängigkeit der erfassten Drehrichtung des zugehörigen Drehantriebs (9) erfolgt.

20. Verfahren zum Steuern einer Säulenhebebühne nach mindestens einem der Ansprüche 17 bis 19, **dadurch gekennzeichnet, dass** ein Überwachen einer Referenzposition des Hubschlittens (5) durch den jeweiligen Referenzwächter (7) in Verbindung mit der zugeordneten Impulszähleinrichtung (31) erfolgt, wobei in Referenzposition des jeweiligen Hubschlittens (5) ein Zuweisen eines Referenzzählerstands zu der zugeordneten Impulszähleinrichtung (31) vorgesehen ist.

21. Verfahren zum Steuern einer Säulenhebebühne nach mindestens einem der Ansprüche 17 bis 20, **dadurch gekennzeichnet, dass** ein Ermitteln eines voreilenden Hubschlittens (5) durch Vergleichen der Zählerstände der den Tragsäulen (1) zugeordneten Impulszähleinrichtungen (31) vorgesehen ist, wobei ein Abschalten des Drehantriebs (9) der zugehörigen Hubspindel (2) solange erfolgt, bis die Zählerstandsdifferenz zwischen den Impulszähleinrichtungen (31) einen vorbestimmten ersten Grenzwert unterschreitet.

22. Verfahren zum Steuern einer Säulenhebebühne nach mindestens einem der Ansprüche 17 bis 21, **dadurch gekennzeichnet, dass**, sobald einer der Referenzwächter (7) die Referenzposition des zugehörigen Hubschlittens (5) meldet und die Vergleichseinrichtung (32) feststellt, dass der Zählerstand der dem Hubschlitten (5) zugeordneten Impulszähleinrichtung (31) von dessen Referenzzählerstand abweicht, ein Abschalten mindestens des betreffenden Drehantriebs (9) und die Ausgabe einer entsprechenden Warnmeldung erfolgt.

23. Verfahren zum Steuern einer Säulenhebebühne nach mindestens einem der Ansprüche 17 bis 22, **dadurch gekennzeichnet, dass**, sobald einer der Drehwächter (8) bei eingeschaltetem Drehantrieb (9) keine Drehbewegung erfasst, ein Abschalten mindestens des betreffenden Drehantriebs (9) und die Ausgabe einer entsprechenden Warnmeldung erfolgt.

24. Verfahren zum Steuern einer Säulenhebebühne nach mindestens einem der Ansprüche 17 bis 23, **dadurch gekennzeichnet, dass**, sobald die von einem der Drehwächter (8) erfasste Drehzahl der zugehörigen Hubspindel (2) niedriger als ein vorbestimmter zweiter Grenzwert ist, ein Abschalten mindestens des betreffenden Drehantriebs (9) und die Ausgabe einer entsprechenden Warnmeldung erfolgt.

25. Verfahren zum Steuern einer Säulenhebebühne nach mindestens einem der Ansprüche 17 bis 24, **dadurch gekennzeichnet, dass**, sobald einer der Hubschlitten (5) seine Referenzposition erreicht hat und der zugehörige Referenzwächter (7) die Referenzposition nicht anzeigt, ein Abschalten mindestens des betreffenden Drehantriebs (9) und die Ausgabe einer entsprechenden Warnmeldung erfolgt.

26. Verfahren zum Steuern einer Säulenhebebühne nach mindestens einem der Ansprüche 17 bis 25, **dadurch gekennzeichnet, dass**, sobald eine der Impulszähleinrichtungen (31) einen vorbestimmten Maximalwert erreicht hat, ein Abschalten mindestens des betreffenden Drehantriebs (9) und die Ausgabe einer entsprechenden Warnmeldung erfolgt.

27. Verfahren zum Steuern einer Säulenhebebühne nach mindestens einem der Ansprüche 17 bis 26, **dadurch gekennzeichnet, dass** das Ausgeben einer entsprechenden Warnmeldung durch Aufleuchten einer oder mehrerer Signallampen (37) erfolgt.

28. Verfahren zum Steuern einer Säulenhebebühne nach mindestens einem der Ansprüche 17 bis 27, **dadurch gekennzeichnet, dass** nach einem Abschalten und/oder nach einem Ausfall der Stromversorgung eines oder mehrerer der Drehantriebe (9) eine Fortsetzung der Inkrementierung bzw. Dekrementierung der Zählerstände der betreffenden Impulszähleinrichtungen (31) erfolgt, um ein Nachlaufen der Hubspindeln (2) zu erfassen, wobei nach einer Auslaufzeit der Hubspindeln (2) ein Ablegen der Zählerstände in einem nicht flüchtigen Speicher (34) vorgesehen ist.

29. Verfahren zum Steuern einer Säulenhebebühne nach mindestens einem der Ansprüche 17 bis 28, **dadurch gekennzeichnet, dass** ein Anzeigen eines Verschleißes bzw. eines Versagens der Tragmutter (3) durch Darstellen eines Ist-Abstands zwischen der Tragmutter (3) und der Fangmutter (4) im Vergleich zu deren Soll-Abstand erfolgt.

## Claims

1. A column lifting platform comprising a controller (30) and at least one support column (1), the support column (1) containing:
- a rotatably supported lifting spindle (2) having an external thread,
- a rotary drive (9) for the lifting spindle (2) controlled by the controller (30),
- a support nut (3) engaged in the lifting spindle (2), which can be moved thereon by a rotary movement of the lifting spindle (2),
- a trap nut (4) engaged in the lifting spindle (2), which is disposed in an offset manner to the support nut (3) in the direction of gravity and follows the support nut (3),
- a lifting carriage (5) connected to the support nut (3), to which at least one support arm (6) is mounted, **characterized by**
- a reference limiter (7) connected to the controller (30) for detecting an approach of the lifting carriage (5), and
- a rotation limiter (8) connected to the controller (30) for detecting a rotary movement of the rotary drive (9),
wherein each support column (1) is allocated a pulse counter (31) connected to the controller (30) for monitoring the position of the lifting carriages (5).

2. The column lifting platform according to claim 1, **characterized in that** each of the lifting spindles (2) is supported and guided such that forces on the lifting spindles (2) in the direction of gravity are received by the support and each of the lifting spindles (2) can be moved against gravity when forces are applied to the lifting spindles (2) against gravity.

3. The column lifting platform according to claim 1 or 2, **characterized in that** the reference limiter (7) and the rotation limiter (8) are inductive proximity switches, wherein the rotation limiter (8) may also be formed by an incremental rotary encoder.

4. The column lifting platform according to at least one of claims 1 to 3, **characterized in that** for obtaining the rotational direction of the rotary drives (9)
- corresponding assist contacts (36) are provided in a pole reversing switch (35) for reversing the direction of rotation of the rotary drives (9),
- the rotation limiter (8) is formed as a quadrature encoder, and/or
- the phase position of the rotary drives (9) is obtained.

5. The column lifting platform according to at least one of claims 1 to 4, **characterized in that** a counter reading of one of the pulse counters (31) can be incremented or decremented depending on the detected direction of rotation of the associated rotary drive (9).

6. The column lifting platform according to at least one of claims 1 to 5, **characterized in that** a reference position of the lifting carriages (5) is monitored by the respective reference limiter (7) in connection with the allocated pulse counter (31), wherein in a reference position of the respective lifting carriage (5) a reference counter reading is assigned to the allocated pulse counter (31).

7. The column lifting platform according to at least one of claims 1 to 6, **characterized in that** when at least two support columns (1) are used the controller (30) includes comparison means (32) for comparing the counter readings of the pulse counters (31) allocated to the support columns (1) and has switch-off means (33) for switching off the individual rotary drives (9).

8. The column lifting platform according to at least one of claims 1 to 7, **characterized in that** the comparison means (32) obtains a leading lifting carriage (5) by using the counter readings of the pulse counters (31) allocated to the support columns (1) and the switch-off means (33) switches off the rotary drive (9) of the allocated lifting spindle (2) until the counter reading difference between the pulse counters (31) falls below a predetermined first limit value.

9. The column lifting platform according to at least one of claims 1 to 8, **characterized in that** as soon as one of the reference limiters (7) reports the reference position of the associated lifting carriage (5) and the comparison means (32) determines that the counter reading of the pulse counter (31) allocated to the lifting carriage (5) deviates from the reference counter reading thereof, the switch-off means (33) switches off at least the respective rotary drive (9) and outputs a corresponding warning whereby in particular a nut breakage monitoring means for monitoring a breakage of the support nut (3) is formed.

10. The column lifting platform according to at least one of claims 1 to 9, **characterized in that** the switch-off means (33) switches off at least the respective rotary drive (9) and outputs a corresponding warning as soon as one of the rotation limiters (8) does not detect any rotary movement while the rotary drive (9) is switched on.

11. The column lifting platform according to at least one of claims 1 to 10, **characterized in that** the switch-off means (33) switches off at least the respective rotary drive (9) and outputs a corresponding warning as soon as the number of rotations of the associated lifting spindle (2) detected by one of the rotation limiters (8) is lower than a predetermined second limit value.

12. The column lifting platform according to at least one of claims 1 to 11, **characterized in that** the switch-off means (33) switches off at least the respective rotary drive (9) and outputs a corresponding warning as soon as one of the lifting carriages (5) has reached its reference position and the associated reference limiter (7) does not indicate the reference position.

13. The column lifting platform according to at least one of claims 1 to 12, **characterized in that** the switch-off means (33) switches off at least the respective rotary drive (9) and outputs a corresponding warning as soon as one of the pulse counters (31) has reached a predetermined maximum value.

14. The column lifting platform according to at least one of claims 1 to 13, **characterized in that** the warning is indicated by one or more signal lamps (37) flashing.

15. The column lifting platform according to at least one of claims 1 to 14, **characterized in that** after a switch-off and/or a power supply failure of one or more rotary drives (9) the incrementing or decrementing of the counter readings of the respective pulse counters (31) is continued for detecting a trailing of the lifting spindles (2) wherein the counter readings are stored in a non-volatile memory (34) after a slow-down time of the lifting spindles (2).

16. The column lifting platform according to at least one of claims 1 to 15, **characterized in that** on each of the lifting carriages (5) a wear and/or failure display (25, 26) for the support nut (3) is provided which indicates an actual distance between the support nut (3) and the trap nut (4) in comparison to the target distance thereof.

17. A method for controlling a column lifting platform according to at least one of claims 1 to 16 wherein the following steps are provided:
- detecting the approach of the lifting carriage (5) by the respective reference limiter (7),
- detecting the rotary movement of the rotary drive (9) by the respective rotation limiter (8), and
- monitoring the position of the lifting carriage (5) by the respective pulse counter (31).

18. The method for controlling a column lifting platform according to claim 17, **characterized in that** the obtaining of the direction of rotation of the rotary drives (9) is performed by:
- evaluating the corresponding assist contacts (36) of a pole reversing switch (35) for reversing the direction of rotation of the rotary drives (9),
- using a quadrature encoder as a rotation limiter (8), and/or
- obtaining the phase position of the rotary drives (9).

19. The method for controlling a column lifting platform according to claim 17 or 18, **characterized in that** an incrementing or decrementing of a counter reading of one of the pulse counters (31) is performed in dependence of the detected direction of rotation of the associated rotary drive (9).

20. The method for controlling a column lifting platform according to at least one of claims 17 to 19, **characterized in that** a monitoring of a reference position of the lifting carriage (5) is performed by the respective reference limiter (7) in connection with the associated pulse counter (31), wherein in the reference position of the respective lifting carriage (5) an assignment of a reference counter reading to the allocated pulse counter (31) is provided.

21. The method for controlling a column lifting platform according to at least one of claims 17 to 20, **characterized in that** an obtaining of a leading lifting carriage (5) is provided by comparing the counter readings of the pulse counters (31) allocated to the support columns (1), wherein a switch-off of the rotary drive (9) of the associated lifting spindle (2) is performed until the counter reading difference between the pulse counters (31) falls below a predetermined first limit value.

22. The method for controlling a column lifting platform according to at least one of claims 17 to 21, **characterized in that** as soon as one of the reference limiters (7) reports the reference position of the associated lifting carriage (5) and the comparison means (32) determines that the counter reading of the pulse counter (31) allocated to the lifting carriage (5) deviates from the reference counter reading thereof, a switch-off of at least the respective rotary drive (9) and the output of a corresponding warning is performed.

23. The method for controlling a column lifting platform according to at least-one of claims 17 to 22, **characterized in that** as soon as one of the rotation limiters (8) does not detect any rotary movement when the rotary drive (9) is switched on, a switch-off of at least the respective rotary drive (9) and the output of a corresponding warning is performed.

24. The method for controlling a column lifting platform according to at least one of claims 17 to 23, **characterized in that** as soon as the number of rotations detected by one of the rotation limiters (8) of the associated lifting spindle (2) is lower than a predetermined second limit value, a switch-off of at least the respective rotary drive (9) and the output of a corresponding warning is performed.

25. The method for controlling a column lifting platform according to at least one of claims 17 to 24, **characterized in that** as soon as one of the lifting carriages (5) reaches its reference position and the associated reference limiter (7) does not indicate the reference position, a switch-off of at least the respective rotary drive (9) and the output of a corresponding warning is performed.

26. The method for controlling a column lifting platform according to at least one of clams 17 to 25, **characterized in that** as soon as one of the pulse counters (31) has reached a predetermined maximum value, a switch-off of at least the respective rotary drive (9) and the output of a corresponding warning is performed.

27. The method for controlling a column lifting platform according to at least one of claims 17 to 26, **characterized in that** the output of a corresponding warning is performed by one or more signal lamps (37) flashing.

28. The method for controlling a column lifting platform according to at least one of claims 17 to 27, **characterized in that** after a switch-off and/or a power supply failure of one or more rotary drives (9) a continuation of the incrementing or decrementing of the counter readings of the respective pulse counters (31) is performed for detecting a trailing of the lifting spindles (2) wherein the storing of the counter readings in a non-volatile memory (34) is provided after a slow-down time of the lifting spindles (2).

29. The method for controlling a column lifting platform according to at least one of claims 17 to 28, **characterized in that** a display of a wear and/or failure of the support nut (2) is performed by indicating an actual distance between the support nut (3) and the trap nut (4) in comparison to the target distance thereof.

## Revendications

1. Plateforme élévatrice à colonne comportant un dispositif de commande (30) et au moins une colonne de support (1), la colonne de support (1) comprenant :
- une broche de levage (2) montée rotative et présentant un filetage extérieur,
- un entraînement rotatif (9) pour la broche de levage (2), qui est commandé par le dispositif de commande (30),
- un écrou porteur (3) qui est en engagement avec la broche de levage (2) et qui est mobile sur celle-ci par un mouvement de rotation de la broche de levage (2),
- un écrou de retenue (4) qui est en engagement avec la broche de levage (2) et qui est agencé en décalage par rapport à l'écrou porteur (3) en direction de la gravité et qui suit l'écrou porteur (3),
- un chariot de levage (5) qui est relié à l'écrou porteur (3) et sur lequel est monté au moins un bras porteur (6),
**caractérisée par**
- un dispositif contrôleur de référence (7) relié au dispositif de commande (30) et destiné à détecter une approche du chariot de levage (5), et
- un dispositif contrôleur de rotation (8) relié au dispositif de commande (30) et destiné à détecter un mouvement de rotation de l'entraînement rotatif (9),
chaque colonne de support (1) étant associée à un dispositif compteur d'impulsions (31) relié au dispositif de commande (30) et destiné à surveiller la position des chariots de levage (5).

2. Plateforme élévatrice à colonne selon la revendication 1, **caractérisée en ce que** chacune des broches de levage (2) est montée et guidée de telle sorte que les forces exercées sur les broches de levage (2) en direction de la gravité sont encaissées par la monture, et en cas de forces exercées sur les broches de levage (2) en sens opposé à la gravité chacune des broches de levage (2) est mobile en sens opposé à la gravité.

3. Plateforme élévatrice à colonne selon la revendication 1 ou 2, **caractérisée en ce que** le dispositif contrôleur de référence (7) et le dispositif contrôleur de rotation (8) sont des commutateurs de proximité inductifs, le dispositif contrôleur de rotation (8) pouvant être constitué également par un codeur rotatif incrémental.

4. Plateforme élévatrice à colonne selon l'une au moins des revendications 1 à 3, **caractérisée en ce que** pour détecter la direction de rotation des entraînements rotatifs (9)
- il est prévu des contacts auxiliaires (36) correspondants au niveau d'un inverseur de polarité (35) pour inverser la direction de rotation des entraînements rotatifs (9),
- le dispositif contrôleur de rotation (8) est réalisé sous forme d'encodeur en quadrature, et/ou
- on détecte la position de phase des entraînements rotatifs (9).

5. Plateforme élévatrice à colonne selon l'une au moins des revendications 1 à 4, **caractérisée en ce qu'**une position de compteur de l'un des dispositifs compteurs d'impulsions (31) est incrémentée ou décrémentée en fonction de la direction de rotation détectée de l'entraînement rotatif (9) associé.

6. Plateforme élévatrice à colonne selon l'une au moins des revendications 1 à 5, **caractérisée en ce qu'**une position de référence des chariots de levage (5) est surveillée par le dispositif contrôleur de référence (7) respectif en association avec le dispositif compteur d'impulsions (31) associé, et dans la position de référence du chariot de levage (5) respectif, une position de compteur de référence est attribuée au dispositif compteur d'impulsions (31) associé.

7. Plateforme élévatrice à colonne selon l'une au moins des revendications 1 à 6, **caractérisée en ce que** lors de l'utilisation d'au moins deux colonnes de support (1), le dispositif de commande (30) comprend un dispositif comparateur (32) pour comparer les positions de compteur des dispositifs compteurs d'impulsions (31) associés aux colonnes de support (1) et présente un dispositif de coupure (33) pour couper les entraînements rotatifs (9) individuels.

8. Plateforme élévatrice à colonne selon l'une au moins des revendications 1 à 7, **caractérisée en ce que** le dispositif comparateur (32) détecte une avance d'un chariot de levage (5) en se basant sur les positions de compteur des dispositifs compteurs d'impulsions (31) associés aux colonnes de support (1), et le dispositif de coupure (33) coupe l'entraînement rotatif (9) de la broche de levage (2) associée jusqu'à ce que la différence des positions de compteur entre les dispositifs compteurs d'impulsions (31) passe au-dessous d'une première valeur limite prédéterminée.

9. Plateformé élévatrice à colonne selon l'une au moins des revendications 1 à 8, **caractérisée en ce que** dès que l'un des dispositifs contrôleurs de référence (7) indique la position de référence du chariot de levage (5) associé et que le dispositif comparateur (32) constate que la position de compteur du dispositif compteur d'impulsions (31) associé au chariot de levage (5) diffère de sa position de compteur de référence, le dispositif de coupure (33) coupe au moins l'entraînement rotatif (9) concerné et émet un message d'alerte correspondant, ce qui constitue en particulier un dispositif de surveillance de rupture d'écrou destiné à surveiller vis-à-vis d'une rupture de l'écrou porteur (3).

10. Plateforme élévatrice à colonne selon l'une au moins des revendications 1 à 9, **caractérisée en ce que** le dispositif de coupure (33) coupe au moins l'entraînement rotatif (9) concerné et émet un message d'alerte correspondant dès que l'un des dispositifs contrôleurs de rotation (8) ne détecte aucun mouvement de rotation, l'entraînement rotatif (9) étant mis en marche.

11. Plateforme élévatrice à colonne selon l'une au moins des revendications 1 à 10, **caractérisée en ce que** le dispositif de coupure (33) coupe au moins l'entraînement rotatif (9) concerné et émet un message d'alerte correspondant dès que la vitesse de rotation de la broche de levage (2) associée, détectée par l'un des dispositifs contrôleurs de rotation (8), est inférieure à une seconde valeur limite prédéterminée.

12. Plateforme élévatrice à colonne selon l'une au moins des revendications 1 à 11, **caractérisée en ce que** le dispositif de coupure (33) coupe au moins l'entraînement rotatif (9) concerné et émet un message d'alerte correspondant dès que l'un des chariots de levage (5) a atteint sa position de référence et que le dispositif contrôleur de référence (7) n'affiche pas la position de référence.

13. Plateforme élévatrice à colonne selon l'une au moins des revendications 1 à 12, **caractérisée en ce que** le dispositif de coupure (33) coupe au moins l'entraînement rotatif (9) concerné et émet un message d'alerte correspondant dès que l'un des dispositifs compteurs d'impulsions (31) a atteint une valeur maximale prédéterminée.

14. Plateforme élévatrice à colonne selon l'une au moins des revendications 1 à 13, **caractérisée en ce que** le message d'alerte est indiqué par allumage d'une ou de plusieurs lampes de signalisation (37).

15. Plateforme élévatrice à colonne selon l'une au moins des revendications 1 à 14, **caractérisée en ce qu'**après une coupure et/ou une défaillance de l'alimentation électrique de l'un ou de plusieurs des entraînements rotatifs (9), l'incrémentation ou la décrémentation des positions de compteur des dispositifs compteurs d'impulsions (31) concernés est poursuivie pour détecter un retard des broches de levage (2), les positions de compteur étant mémorisées dans une mémoire non volatile (34) après une période de mise à l'arrêt des broches de levage (2).

16. Plateforme élévatrice à colonne selon l'une au moins des revendications 1 à 15, **caractérisée en ce qu'**il est prévu sur chacun des chariots de levage (5) un affichage d'usure ou de défaillance (25, 26) pour l'écrou porteur (3), qui représente une distance réelle entre l'écrou porteur (3) et l'écrou de retenue (4) par comparaison à leur distance de consigne.

17. Procédé de commande d'une plateforme élévatrice à colonne selon l'une au moins des revendications 1 à 16, comprenant les étapes suivantes :
- on détecte l'approche du chariot de levage (5) par le dispositif contrôleur de référence (7) respectif,
- on détecte le mouvement de rotation de l'entraînement rotatif (9) par le dispositif contrôleur de rotation (8) respectif, et
- on surveille la position du chariot de levage (5) par le dispositif compteur d'impulsions (31) respectif.

18. Procédé de commande d'une plateforme élévatrice à colonne selon la revendication 17, **caractérisé en ce que** la détection de la direction de rotation des entraînements rotatifs (9) s'effectue par :
- l'évaluation des contacts auxiliaires (36) correspondants d'un inverseur de polarité (35) pour l'inversion de la direction de rotation des entraînements rotatifs (9),
- l'utilisation d'un encodeur en quadrature à titre de dispositif contrôleur de rotation (8), et/ou par
- la détection de la position de phase des entraînements rotatifs (9).

19. Procédé de commande d'une plateforme élévatrice à colonne selon la revendication 17 ou 18, **caractérisé en ce qu'**une incrémentation ou une décrémentation d'une position de compteur de l'un des dispositifs compteurs d'impulsions (31) s'effectue en fonction de la direction de rotation détectée de l'entraînement rotatif (9) associé.

20. Procédé de commande d'une plateforme élévatrice à colonne selon l'une au moins des revendications 17 à 19, **caractérisé en ce qu'**une surveillance d'une position de référence du chariot de levage (5) s'effectue par le dispositif contrôleur de référence (7) respectif en association avec le dispositif compteur d'impulsions (31) associé, et dans la position de référence du chariot de levage (5) respectif, on prévoit l'attribution d'une position de compteur de référence au dispositif compteur d'impulsions (31) associé.

21. Procédé de commande d'une plateforme élévatrice à colonne selon l'une au moins des revendications 17 à 20, **caractérisé en ce que** l'on prévoit une détection de l'avance d'un chariot de levage (5) par comparaison des positions de compteur des dispositifs compteurs d'impulsions (31) associés aux colonnes de support (1), une coupure de l'entraînement rotatif (9) de la broche de levage (2) associée ayant lieu jusqu'à ce que la différence des positions de compteur entre les dispositifs compteurs d'impulsions (31) passe au-dessous d'une première valeur limite prédéterminée.

22. Procédé de commande d'une plateforme élévatrice à colonne selon l'une au moins des revendications 17 à 21, **caractérisé en ce que** dès que l'un des dispositifs contrôleurs de référence (7) indique la position de référence du chariot de levage (5) associé et que le dispositif comparateur (32) constate que la position de compteur du dispositif compteur d'impulsions (31) associé au chariot de levage (5) diffère de sa position de compteur de référence, au moins l'entraînement rotatif (9) concerné est coupé et un message d'alerte correspondant est émis.

23. Procédé de commande d'une plateforme élévatrice à colonne selon l'une au moins des revendications 17 à 22, **caractérisé en ce que** dès que l'un des dispositifs contrôleurs de rotation (8) ne détecte aucun mouvement de rotation, l'entraînement rotatif (9) étant mis en marche, au moins l'entraînement rotatif (9) concerné est coupé et un message d'alerte correspondant est émis.

24. Procédé de commande d'une plateforme élévatrice à colonne selon l'une au moins des revendications 17 à 23, **caractérisé en ce que** dès que la vitesse de rotation de la broche de levage (2) associée, détectée par l'un des dispositifs contrôleurs de rotation (8), est inférieure à une seconde valeur limite prédéterminée, au moins l'entraînement rotatif (9) concerné est coupé et un message d'alerte correspondant est émis.

25. Procédé de commande d'une plateforme élévatrice à colonne selon l'une au moins des revendications 17 à 24, **caractérisé en ce que** dès que l'un des chariots de levage (5) a atteint sa position de référence et que le dispositif contrôleur de référence (7) associé n'affiche pas la position de référence, au moins l'entraînement rotatif (9) concerné est coupé et un message d'alerte correspondant est émis.

26. Procédé de commande d'une plateforme élévatrice à colonne selon l'une au moins des revendications 17 à 25, **caractérisé en ce que** dès- que l'un des dispositifs compteurs d'impulsions (31) a atteint une valeur maximale prédéterminée, au moins l'entraînement rotatif (9) concerné est coupé et un message d'alerte correspondant est émis.

27. Procédé de commande d'une plateforme élévatrice à colonne selon l'une au moins des revendications 17 à 26, **caractérisé en ce que** l'émission d'un message d'alerte correspondant s'effectue par allumage d'une ou de plusieurs lampes de signalisation (37).

28. Procédé de commande d'une plateforme élévatrice à colonne selon l'une au moins des revendications 17 à 27, **caractérisé en ce qu'**après une coupure et/ou une défaillance de l'alimentation électrique de l'un ou de plusieurs des entraînements rotatifs (9), l'incrémentation ou la décrémentation des positions de compteur des dispositifs compteurs d'impulsions (31) concernés est poursuivie pour détecter un retard des broches de levage (2), et après une période de mise à l'arrêt des broches de levage (2), les positions de compteur sont mémorisées dans une mémoire non volatile (34).

29. Procédé de commande d'une plateforme élévatrice à colonne selon l'une au moins des revendications 17 à 28, **caractérisé en ce qu'**un affichage d'une usure ou d'une défaillance de l'écrou porteur (3) s'effectue par représentation d'une distance réelle entre l'écrou porteur (3) et l'écrou de retenue (4) par comparaison à leur distance de consigne.
